# FASCICULE DE BREVET EUROPEEN

(11) **EP 0 719 686 B1**
(45) Date de publication et mention de la délivrance du brevet: **23.06.1999**
(21) Numéro de dépôt: 95402934.4
(22) Date de dépôt: 22.12.1995
(51) Int. Cl.: B60T 15/04

(54) **Détendeur de pression et valve de freinage utilisant un tel détendeur**
Druckentlastungsventil und dieses verwendendes Bremsventil
Pressure reducing valve and brake valve utilizing same

(30) Priorité: 30.12.1994 FR 9415962
(43) Date de publication de la demande: 03.07.1996
(73) Titulaire: WABCO FRANCE Société en nom collectif, 77410 Claye Souilly (FR)
(72) Inventeur: Bion, Jacques, F-93600 Aulnay sous Bois (FR); Haimart, Jacques, F-93410 Vaujours (FR); Barbeau, Jean-Luc, F-93370 Montfermeil (FR)
(74) Mandataire: Hirsch, Marc-Roger

(56) Documents cités:
- DE-A- 2 520 251
- US-A- 3 399 932
- US-A- 5 080 133

## Description

La présente invention s'applique à un détendeur de pression, notamment à un détendeur destiné à fournir une pression de commande de freinage comme par example, connu du document US-A-3 399 932 et comprenant: un poussoir d'actionnement solidaire, au moins en réaction, d'un piston de réaction soumis à la pression délivrée par ce détendeur; un double clapet de forme générale cylindrique et comportant deux sièges annulaires, dont l'un est susceptible d'isoler, par contact avec une première surface de siège conjuguée, une chambre d'alimentation en fluide sous pression, et dont l'autre est susceptible d'isoler, par contact avec une deuxième surface de siège conjuguée, une chambre de sortie du détendeur par rapport à l'atmosphère ou à la décharge, au moins l'un des deux sièges annulaires du double clapet étant constitué par un joint torique d'étanchéité en un matériau élastique tel qu'un élastomère, appliqué par son élasticité propre dans une rainure annulaire ménagée à la périphérie du corps du double clapet, sensiblement selon une section transversale de la forme générale cylindrique du double clapet et de telle manière que l'une des surfaces latérales du joint torique, disposée à l'extérieur de ladite rainure annulaire constitue une surface de siège susceptible de coopérer de façon étanche avec ledit premier siège conjugué de façon étanche avec ledit premier siège pour obturer ladite chambre d'alimentation ou respectivement avec ledit deuxième siège conjugué pour obturer ladite chambre de sortie.

L'invention concerne en particulier un détendeur de pression destiné à être utilisé dans une valve à double circuit de commande du freinage d'un véhicule.

Les détendeurs de pression pilotés par une force d'actionnement constante donnée par exemple par un ressort, sont bien connus. On en utilise qui sont pilotés par la force instantanée d'actionnement du frein, pour délivrer une pression de freinage ou de commande du freinage, en particulier pour commander le freinage de véhicules routiers lourds, par exemple les véhicules industriels freinés à l'air comprimé, mais aussi les véhicules freinés par une pression hydraulique, délivrée à partir d'un réservoir de pression hydraulique. Les problèmes posés par les détendeurs de pression de freinage, appelés aussi "robinets de frein" par l'homme de l'art, sont particulièrement aigus, du fait que ces valves de freinage doivent satisfaire à des exigences contradictoires: elles doivent être relativement précises, fidèles, stables et dotées d'une faible hystérésis et doivent surtout être exemptes de vibrations, c'est-à-dire bien amorties, ce qui constitue déjà un ensemble contradictoire, car un système mécanopneumatique bien amorti présente des frottements et donc une hystérésis assez élevée. Une autre source de difficulté provient du fait que le freinage des véhicules industriels, en Europe et dans les pays développés en général, est réalisé actuellement avec un double circuit, à circuits de freinage séparés pour l'avant et l'arrière du véhicule, le relais du freinage vers la remorque étant en général pris sur le circuit de commande du freinage de l'avant, tandis que le freinage de l'arrière est légèrement retardé par rapport à celui de la remorque.

Les valves de freinage à double circuit doivent ainsi présenter un niveau élevée d'instantanéité et de parallélisme dans les commandes du freinage, et ces résultats doivent être obtenus avec des valves peu onéreuses à réaliser (les matériaux nobles sont à exclure) et qui présentent une grande résistance à l'usure dans le temps, et donc une certaine insensibilité aux grands froids, aux grandes chaleurs, à la présence accidentelle d'eau de condensation et d'huile dans le circuit pneumatique, et une grande résistance à l'usure par l'actionnement (une garantie de plus d'un million d'actionnements sans usure rédhibitoire est souvent demandée).

La présente invention se propose précisément d'améliorer quelques unes des qualités contradictoires réclamées aux détendeurs de pression, notamment à ceux utilisés comme robinets de freinage et plus particulièrement à ceux destinés à constituer des valves de freinage à double circuit à actionnement simultané des deux circuits. Parmi les qualités améliorées par la présente invention, on peut citer la simultanéité et le parallélisme de la commande, la meilleure résistance à la mise en vibration de l'ensemble mécano-pneumatique, la compacité et les facilités de montage et de réalisation, gages d'un prix de revient réduit tout en conservant une haute fiabilité dans le temps et après un grand nombre d'actionnements.

A cet effet, selon l'invention, une surface cylindrique d'alésage coopérant avec un prolongement de guidage du double clapet est portée par une pièce annulaire en forme générale de cloche et engagée de façon étanche par sa périphérie dans un alésage du corps de détendeur pour former, en coopération avec le double clapet, le fond de cet alésage du côté du ressort de rappel du double clapet, tandis que l'autre fond de l'alésage est fermé de façon étanche, en coopération avec ledit joint torique du double clapet par une plaque annulaire portant le premier siège annulaire coopérant avec ledit joint torique pour délimiter ladite chambre d'alimentation en fluide sous pression.

Selon un autre mode de réalisation de l'invention, le double clapet est sollicité en direction du premier siège annulaire par un ressort de compression formant ressort de rappel et dont une extrémité est en appui sur une surface d'appui du double clapet et dont l'autre extrémité est en appui hors de ladite chambre d'alimentation sur une pièce d'appui fixée au corps principal du détendeur et ladite pièce annulaire entoure partiellement le ressort de rappel du double clapet et est maintenue en position dans l'alésage en butée entre ladite plaque annulaire portant le siège coopérant et un couvercle de fond portant la pièce d'appui du ressort de rappel.

Selon un autre mode de réalisation de l'invention, dans lequel le double clapet comporte un passage central relié à l'échappement ou à la décharge, et une rainure annulaire, dans laquelle est logé le joint torique, la rainure annulaire peut présenter une section en V ménageant deux surfaces annulaires de portée latérale de largeurs différentes, la surface annulaire de plus grande largeur débouchant sur la surface extérieure du prolongement de guidage tandis que la surface de faible largeur débouche, en position de fermeture du double clapet, à proximité de la surface de siège conjuguée du joint torique.

Selon encore un autre mode de réalisation de l'invention, le double clapet comporte, du côté de la chambre de sortie, un prolongement de guidage à surface extérieure cylindrique, engagé dans un alésage de poussoir d'actionnement et muni, au-delà de la rainure annulaire logeant le joint torique, de fentes ou passages d'échappement reliés par un passage central du double clapet, à l'échappement, et l'extrémité du piston de réaction présente une forme annulaire engagée à coulissement sur le prolongement de guidage, qui coulisse de façon étanche dans un alésage de guidage par sa périphérie, et qui présente à son extrémité du côté du double clapet, une surface de siège annulaire susceptible de venir en appui sur la partie annulaire en saillie dudit joint torique, afin d'obturer la liaison entre l'intérieur du double clapet relié à la décharge et la chambre de sortie, via lesdites fentes ou passages d'échappement.

Selon un autre mode de réalisation avantageux de l'invention, le double clapet comporte, du côté de la chambre d'alimentation, un prolongement de guidage à surface extérieure cylindrique et qui coopère avec un joint annulaire à lèvres disposé dans un passage annulaire ménagé entre ladite surface extérieure cylindrique de prolongement et un alésage de plus grand diamètre, la lèvre intérieure du joint annulaire étant au contact de la surface extérieure cylindrique, et la lèvre extérieure étant en contact dudit alésage de plus grand diamètre, et le talon du joint à lèvres est en appui sur une rondelle de fermeture obturant ledit passage annulaire et sollicitée à l'encontre de la pression régnant dans la chambre d'alimentation, par l'extrémité d'un ressort hélicoïdal de compression dont l'autre extrémité est en appui sur une paroi de fond du détendeur, à l'intérieur d'une chambre d'échappement reliée à l'échappement par l'intermédiaire d'un moyen d'isolation tel qu'un filtre ou un tampon d'échappement.

Selon une forme simplifiée de ce dernier mode de réalisation, le joint annulaire à lèvres peut être remplacé par un joint annulaire simple (torique) disposé entre ladite surface extérieure cylindrique du prolongement et un alésage de plus grand diamètre ménagé dans ladite pièce annulaire en forme générale de cloche et ladite pièce annulaire est en appui autour dudit prolongement sur une rondelle d'appui sollicitée de la même façon que la rondelle de fermeture.

La valve à double circuit de commande de deux circuits de freinage par une barrette d'actionnement à guidage latéral et agissant simultanément sur les poussoirs de deux détendeurs parallèles dont chacune des chambres de circuit est reliée à un circuit distinct de commande du freinage du véhicule, est caractérisée en ce que chacun des détendeurs parallèles est constitué par un des détendeurs du type décrit précédemment. Chacun des détendeurs peut comporter un piston de réaction en matière relativement souple, telle que de la matière plastique, et qui est muni d'une plaque métallique ou rigide en insert, sur laquelle s'appuie de façon articulée une partie en saillie de la barrette d'actionnement.

Selon un autre mode de réalisation de la valve à double circuit selon l'invention, la barrette d'actionnement, dans une disposition verticale de la valve à double circuit avec échappement en partie basse, présente une forme légèrement arquée vers le centre, avec une partie en saillie centrale en appui sur une plaquette rigide encastrée dans un logement d'un poussoir central d'actionnement en matière flexible telle que de la matière plastique, la barrette étant ainsi en appui, en position de service, au centre de sa partie supérieure arquée sur la partie en saillie centrale et, au voisinage de chacune de ses extrémités, par une partie en saillie latérale, sur la plaque métallique ou rigide de chacun des deux circuits de freinage et, sous l'action de ressort de rappel des pistons de réaction, la barrette est susceptible de s'appuyer, au voisinage de chacune de ses extrémités et du côté opposé aux saillies latérales, sur deux surfaces de butée hautes ménagées dans le couvercle de valve.

Selon encore un autre mode de réalisation de l'invention, le corps de valve est constitué par l'assemblage de trois parties distinctes, venant maintenir en position les constituants de la valve: une partie centrale portant les deux détendeurs de pression avec leurs pistons de réaction; un couvercle supérieur contenant le piston poussoir central et le ressort de progressivité et venant enfermer la barrette d'actionnement simultané entre une surface d'appui du poussoir central et chacune des surfaces d'appui des deux pistons de réaction; un couvercle inférieur contenant, le cas échéant, un filtre d'échappement et maintenant en position ou comportant une paroi de fond sur laquelle s'appuient les ressorts de rappel et les pièces de guidage en cloche des doubles clapets.

Les divers modes de réalisation originaux de l'invention permettent de disposer d'une surface de siège en élastomère très flexible et qui se maintient en place sans avoir à utiliser des processus d'adhérisation (vulcanisation, collage sur métal). En outre, ces modes de réalisation permettent de personnaliser plus aisément le joint en élastomère à l'utilisation particulière du détendeur, juste au moment du montage du détendeur, en choisissant parmi une large gamme de joints toriques différents par leur élastomère (dureté Shore) mais qui peuvent aussi présenter des dimensions légèrement différentes.

D'autres buts, caractéristiques et avantages apparaîtront à la lecture de la description d'un mode de réalisation de l'invention, faite à titre non limitatif et en regard du dessin annexé, dans lequel:
- la figure 1 représente, en coupe transversale, un détendeur de pression selon l'invention, utilisé dans une valve de freinage à double circuit, dont les liaisons à un véhicule porteur et à un véhicule remorqué, sont représentées schématiquement; et
- la figure 2 représente, en coupe transversale à plus grande échelle et en vue fragmentaire, les zones d'étanchéité du joint torique utilisé par le détendeur selon l'invention.

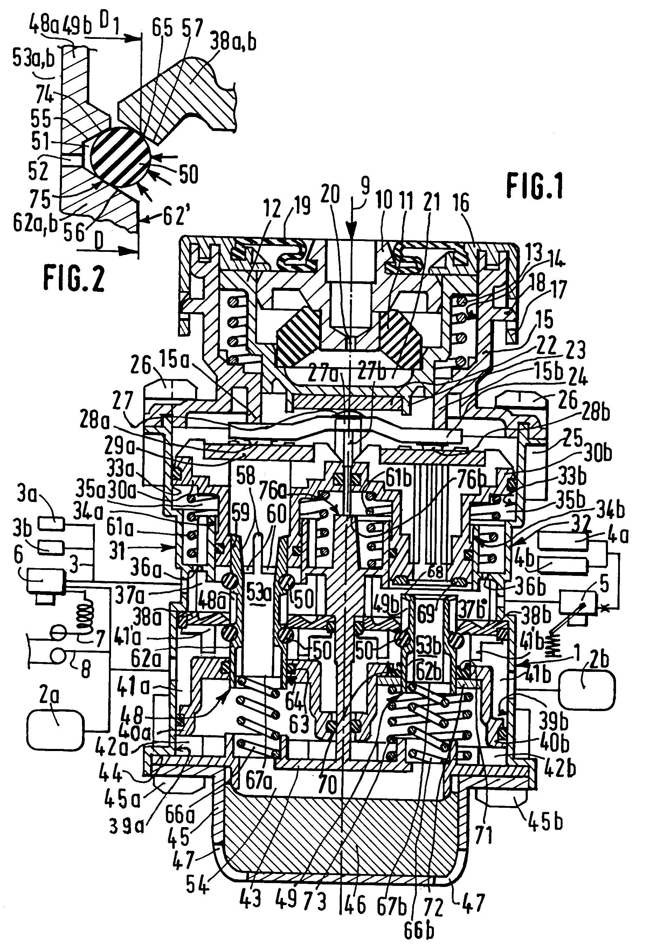

Le détendeur de pression 1 à double circuit selon l'invention, représenté en coupe sur la figure 1, est utilisé habituellement sur les circuits pneumatiques de freinage des véhicules routiers ou industriels lourds. Sur ces véhicules lourds, il est interposé entre deux réservoirs d'air comprimé 2a et 2b alimentés en air par un compresseur non représenté et, respectivement, un circuit de freinage avant 3 et un circuit de freinage arrière 4 de, par exemple, un tracteur de semi-remorque non représenté. Le circuit de freinage du tracteur comporte, par exemple, en outre, une valve 5 de freinage proportionnel à la charge sur le circuit arrière, et une valve-relais de freinage de remorque 6, pilotée en principal, par exemple par le circuit avant 3 (elle est pilotée également, en secours, par le circuit arrière et par le circuit de frein de stationnement) et qui alimente un raccord de commande de freinage de remorque 7, flexible et désaccouplable. Un autre raccord 8, également flexible et désaccouplable, permet d'alimenter en air comprimé le circuit de freinage de remorque (non représenté) et de faire déclencher le freinage automatique de la remorque en cas de désaccouplage de celle-ci d'avec le véhicule tracteur.

Comme on le voit sur la figure 1, l'actionnement du freinage à double circuit est réalisé par l'application d'une force d'actionnement 9 à un piston d'actionnement 10, (par exemple par l'intermédiaire d'une pédale de frein non représentée) . Le piston 10 comprime en cisaillement de façon connue, un bloc annulaire en élastomère 11 logé dans un bloc-poussoir mobile 12, rappelé vers le haut par un ressort de rappel 13. Le bloc poussoir, réalisé de préférence en matière plastique moulée, est emprisonné dans un alésage 14 d'un corps supérieur 15 par un couvercle 16 à plusieurs rabats 17 d'accrochage sur des ergots 18 du corps supérieur 15. Le couvercle 16 est relié de façon étanche par une membrane flexible annulaire 19 en élastomère au piston d'actionnement 10, qui présente, par ailleurs, un passage central 20 de mise à l'atmosphère d'une chambre 21 fermée à une extrémité par le bloc annulaire en élastomère 11.

Le bloc poussoir 12 comporte, à sa partie inférieure, une plaque métallique 22, par exemple circulaire et enchâssée dans des prolongements 23 du bloc poussoir 12, formant plaque de poussée pour une barrette 24 d'actionnement simultané des deux détendeurs selon l'invention, logés dans un corps principal 25 assemblé, par exemple par des vis 26, au corps supérieur 15. La barrette 24 présente une forme légèrement arquée vers le haut, avec en son centre une partie en saillie 27, par exemple un pion métallique à tête arrondie, en appui sur la plaque métallique 22 et deux rainures latérales 27a recevant une nervure de centrage 27b du corps principal 25.

La barrette 24 présente, au voisinage de chacune de ses extrémités, une partie en saillie 28a, 28b, en appui sur la plaque métallique rigide 29a ou 29b d'un piston de réaction 30a, 30b de chacun des détendeurs de pression 31 et 32 proprement dits du détendeur à double circuit 1.

Chacun des détendeurs de pression 31 et 32 selon l'invention représentés sur la figure 1, est réalisé selon un mode de réalisation différent, principalement à des fins d'illustration, mais l'on doit comprendre que l'on utilise en général le même type de détendeur pour chacun des deux circuits de la valve double de freinage, dénommée en général par l'homme de l'art "robinet double de freinage". Les éléments identiques et remplissant sensiblement les mêmes fonctions des deux détendeurs seront distingués par la lettre a pour le détendeur 31, affecté, selon la figure 1, au circuit de freinage avant et de remorque, et par la lettre b pour le détendeur 32, affecté, selon la figure 1, au freinage du ou des essieu(x) arrière(s) du véhicule.

Chacun des pistons de réaction 30a, 30b, solidaire au moins en réaction des plaques rigides 29a, 29b formant poussoir, est guidé de façon étanche (ici à l'aide de bagues d'étanchéité toriques) dans deux alésages concentriques 33a, 33b et 34a, 34b, ménagés dans le corps principale 25 et délimitant, avec le piston de réaction correspondant, une chambre de réaction annulaire 35a et 35b. Chacune des chambres de réaction communique par un passage étranglé 36a, 36b avec une chambre de sortie 37a, 37b du détendeur, reliée au circuit de freinage correspondant 3 ou 4, de telle façon que la pression délivrée au circuit de freinage exerce, de façon amortie par le passage étranglé, une force de réaction sur le piston de réaction 30a, 30b. Cette force s'oppose à la force d'actionnement 9 jusqu'à équilibrer et surmonter cette dernière.

Chacune des chambres de sortie 37a, 37b, est fermée à sa partie inférieure sur la figure 1, par une plaque annulaire de siège 38a, 38b, engagée de façon étanche au fond d'un alésage 39a, 39b, ménagée à la partie inférieure, sur la figure 1, du corps de valve principal 25.

Dans chacun des alésages 39a, 39b, est engagé, également de façon étanche par sa périphérie, une pièce annulaire en forme générale de cloche 40a, 40b servant de couvercle de fermeture à une chambre d'alimentation 41a, 41b, en air comprimé ou en fluide sous pression, reliée respectivement au réservoir 2a ou 2b. La pièce annulaire 40a, 40b est maintenue en place et en appui sur des prolongements 41'a, 41'b de la plaque annulaire de siège et par la poussée d'ergots 42a, 42b, ménagés sur une pièce d'appui 43, plaquée sur une portée 44 à l'entrée des alésages 39a, 39b, par un couvercle de fond 45 fixé au corps principal 25 par des vis 45a, 45b. La pièce d'appui 43 emprisonne un filtre d'échappement 46 destiné à amortir les bruits d'échappement et à isoler les chambres d'échappement internes au robinet de frein par rapport à l'atmosphère et aux pollutions, tout en autorisant un débit d'échappement important à travers des ouvertures 47 du couvercle.

Le double clapet 48 et 49 de chacun des détendeurs 31, 32, comporte un corps 48a, 49b de forme générale cylindrique et deux surfaces de siège annulaires. Sur le double clapet 48 du détendeur 31, chacune des surfaces de siège est constituée, selon l'invention, par un joint torique 50, en principe standard, c'est-à-dire à section transversale circulaire ou ovale, en un matériau élastique tel qu'un élastomère et appliqué par son élasticité propre (serrage annulaire) dans une rainure annulaire 51 (voir la figure 2) dont les parois latérales sont, par exemple, en forme de V, en section transversale.

La rainure 51 communique par au moins un passage 52 (voir la figure 2) avec le passage intérieur central 53a, 53b du corps 48a, 49b du double clapet relié à la chambre d'échappement interne 54 du robinet à double circuit 1, de telle manière que la pression de la chambre d'alimentation 41a, 41b vienne plaquer, comme représenté à la figure 2, le joint torique au contact des deux parois latérales annulaires 55 et 56 de la rainure 51, sans risquer d'emprisonner un matelas d'air comprimé dans la rainure 51. Comme représenté sur la figure 2, la paroi latérale 56 peut être plus large que la paroi 55 pour se raccorder à une surface d'étanchéité 62' sensiblement de même diamètre D que le diamètre moyen de portage D1 du joint torique 50 sur la surface de siège annulaire conjugué 57 (surface de portage 65). Par ailleurs, les passages 52 peuvent être supprimés lorsque le placage du joint torique 50 dans la rainure 51 est suffisamment énergique.

Le double clapet 48 présente deux joints toriques 50 montés sensiblement de la même façon dans une rainure annulaire 51 ménagée à la périphérie du corps 48a du double clapet, selon une section transversale de la forme générale cylindrique de ce corps.

Comme représenté à la figure 2, l'une des faces latérales du joint torique 50, disposée à l'extérieur de la rainure annulaire 51, est susceptible de coopérer de façon étanche avec la surface de siège annulaire conjugué 57 (voir la figure 2), ménagée sur la plaque annulaire de siège 38a, 38b, pour obturer de façon étanche la chambre d'alimentation 41a, 41b.

Dans le détendeur 31, le corps 48a du double clapet 49 est prolongé au-delà du joint torique 50 supérieur selon la figure 1, par une bague ou des ergots de guidage 58, qui sont engagés dans un alésage intérieur 59 du piston de réaction 30a, et qui ménagent des fentes ou passages d'échappement 60 reliant le passage intérieur 53a mis à l'échappement et la chambre de sortie 37a. La surface extérieure cylindrique des ergots 58 assure le guidage axial du double clapet 48 par déplacement coulissant dans l'alésage 59, tandis que le piston de réaction 30a est repoussé par un ressort 61a au contact de la partie en saillie 28a de la barrette 24.

A sa partie inférieure (selon la figure 1), le double clapet 48 présente un prolongement 62a à surface extérieure cylindrique coopérant de façon étanche (ici par l'intermédiaire d'un joint d'étanchéité torique 63) avec un alésage de guidage 64 ménagé dans la pièce annulaire 40a en forme de cloche. Le diamètre D de l'alésage 64 ou de la surface extérieure du prolongement 62 est sensiblement égal au diamètre moyen D1 de la portée 65 du joint torique 50 sur la surface de siège conjuguée 57 (voir la figure 2) ménagée sur la plaque annulaire de siège 38a, 38b. Le double clapet 48 est ainsi équilibré à l'égard de la pression régnant dans la chambre d'alimentation 41a et est appliqué sur la surface de siège annulaire d'alimentation 57, indépendamment de la pression régnant dans la chambre 41a, uniquement par la force de réaction d'un ressort de compression 66a, dont une extrémité est en appui sur une surface d'appui 67a du double clapet 48, et dont l'autre extrémité est en appui sur la pièce d'appui 43. On voit sur la figure 1 que le ressort 66a ou 66b de rappel du double clapet 48 ou 49 est ainsi disposé hors de la chambre 41a, 41b d'alimentation en air comprimé et dans le prolongement vers le bas (selon la figure) du double clapet. Il est ainsi possible de prévoir un ressort de rappel relativement long et dont l'effort de réaction varie moins au cours de l'actionnement du détendeur.

Le corps 49b du détendeur 49 se prolonge dans la chambre de sortie 37b par une partie en saillie formant poussoir terminé par une surface de siège annulaire 68 relativement rigide qui entoure le passage central 53b et qui, dans la position de desserrage représentée sur la figure 1, est située en face et à distance d'un siège annulaire en élastomère 69 fixé par tout moyen adéquat tel qu'une adhérisation (collage d'élastomère par vulcanisation de ce dernier) à la surface frontale annulaire, débouchant dans la chambre de sortie 37b, du piston de réaction 30b. Comme le piston de réaction 30a, le piston 30b se déplace également à sa partie inférieure de façon étanche dans un alésage de guidage 34b, de façon à bien centrer les déplacements du siège annulaire en élastomère 69 sur le siège annulaire 68 du double clapet 49.

Comme le double clapet 48, le double clapet 49 présente un prolongement 62b dont la surface extérieure cylindrique coopère de façon étanche avec un équivalent de l'alésage 64 constitué ici par un joint annulaire à lèvres 70, dont la lèvre intérieure 71 vient frotter sur la surface cylindrique extérieure du prolongement 62b, et dont la lèvre extérieure est en appui sur un alésage de la pièce annulaire en forme de cloche 40b. Le joint à lèvres 70 permet de réduire la friction entre la pièce 40b et le prolongement 62b, pour une même qualité d'étanchéité mobile, et il est ici maintenu en position par une rondelle 72, appliquée sur le fond de la cloche 40b par un ressort de compression 73.

On va maintenant décrire le fonctionnement de la valve de freinage 1. Dans la position représentée sur la figure 1, les chambres d'alimentation 41a et 41b sont alimentées en air comprimé par les réservoirs correspondants 2a et 2b, et les ressorts 66a et 66b appliquent les deux joints toriques d'étanchéité 50 sur leur surface de siège correspondante 57 pour assurer un contact d'étanchéité étroit et quasi linéaire à trois faces annulaires concentriques respectives: 65 pour la surface de siège 57 ménagée sur la plaque annulaire 38a, 38b et 74, 75 sur les parois annulaires 55 et 56. Les ressorts de rappel 61a et 62b des pistons de réaction 30a et 30b rappellent en fait la barrette 24 au contact de deux ergots de butée 15a et 15b du corps supérieur 15 du couvercle de valve.

Pour provoquer un freinage, le conducteur du véhicule exerce un effort d'actionnement selon la flèche 9, par exemple par l'intermédiaire d'une pédale de frein, en provoquant une course déterminée du piston d'actionnement 10, ce qui provoque la descente (selon la figure 1), par l'intermédiaire du bloc d'élastomère 11 formant ressort de progressivité, de la barrette 24 poussant les deux pistons de réaction 30a et 30b à l'encontre de leurs ressorts de rappel 61a et 61b. Les deux pistons 30a et 30b actionnés simultanément, viennent quasi simultanément en appui sur le siège d'étanchéité du double clapet par rapport aux chambres de sortie respectives 37a, 37b. Pour cela, le prolongement inférieur du piston de réaction 30a vient en contact d'étanchéité avec le joint torique supérieur 50 du double clapet 48, pour isoler de l'échappement la chambre de sortie 37a, tandis que le siège annulaire en élastomère 69 du piston de réaction 30b vient en appui sur le siège annulaire 68 pour isoler de l'échappement la chambre de sortie 37b.

Le déplacement vers le bas des pistons de réaction continuant, les doubles clapets 48 et 49 sont repoussés vers le bas à l'encontre de leurs ressorts de rappel 66a et 66b, et leurs joints toriques inférieurs 50 se décollent de leur surface de siège conjuguée 57 (voir la figure 2) pour ouvrir un passage annulaire entre la surface extérieure latérale du joint torique 50 et la surface de portée 65 sur la face de portée 57. Ce passage annulaire relie respectivement les chambres d'alimentation 41a et 41b aux chambres de sortie 37a et 37b, c'est-à-dire en fait les réservoirs d'air comprimé 2a et 2b aux cylindres de frein respectifs avant 3a et 3b et arrière 4a et 4b sur le véhicule tracteur.

Nous supposons que le véhicule tracteur est accouplé à un véhicule semi-remorque à pleine charge. Dans un tel cas, pour un freinage violent, une partie importante de la charge de la semi-remorque vient se transférer au freinage sur l'essieu moteur du véhicule tracteur freiné par les cylindres 4a et 4b, et la valve de correction de freinage 5 est ouverte en grand. La capacité des cylindres de frein 4a et 4b peut ainsi être jusqu'à quatre fois plus importante que celle des cylindres de frein avant 3a et 3b, qui sont par ailleurs plus proches de la double valve de freinage 1 située à l'avant de la cabine du véhicule. La pression de freinage dans les cylindres de frein avant 3b et 3a, et aussi dans la valve relai de remorque 6 qui adresse à grand débit une pression de commande de freinage par la conduite 7 vers la valve relais de freinage de remorque (non représentée), augmente rapidement et la pression régnant dans la chambre de sortie 37a est transmise avec un léger retard par l'étranglement 36a à la chambre de réaction 35a et augmente jusqu'au moment où l'effort de réaction qui s'exerce sur le piston de réaction 29a et qui est transmis à la barrette 24 par la partie en saillie 28a dépasse la moitié de l'effort exercé par le conducteur selon la flèche 9.

L'effort exercé sur le pion métallique 27 à l'encontre de la force 9 oblige alors le poussoir mobile 12 à remonter en comprimant en cisaillement le ressort annulaire de progressivité 11 jusqu'à ce que le joint torique inférieur 50 du double clapet 48 vienne à nouveau en contact avec la surface de portage 65 sur le siège 57, sans que la partie inférieure du piston de réaction 30a ne cesse d'être en contact avec le joint torique supérieur 50. La pression de freinage cesse alors d'augmenter dans la chambre de sortie 37a et par voie de conséquence dans les cylindres de frein avant 3a et 3b et dans ceux de la semi-remorque. La pression de freinage qui était alors inférieure, continue par contre à augmenter dans les cylindres de frein arrière 4a, 4b, où la montée du freinage était en retard par rapport au cylindre de frein de remorque, ce qui est favorable sur le plan de la stabilité au freinage du véhicule semi-remorque, car la remorque se maintient en traction, ce qui supprime les risques de mise en portefeuille au freinage.

Lorsqu'une pression suffisante est atteinte dans la chambre d'alimentation 37b, le même phénomène d'équilibre que celui décrit en relation avec le détendeur 31 se produit. Le joint torique inférieur 50 du double clapet 49 revient au contact du siège d'étanchéité 57 de la plaque de siège 38b, sans que le contact cesse entre le siège annulaire 68 et le siège en élastomère 69 sur le piston de réaction 35b. La plaque rigide 29b est repoussée vers le haut avec la partie de droite (sur le dessin) de la barrette 24, ce qui provoque une compression de cisaillement supplémentaire du ressort de progressivité 11 sans que la position du poussoir d'actionnement 10 ne change.

Pour provoquer le desserrage partiel ou total des freins, le conducteur relâche partiellement ou totalement l'effort 9. En cas de relâchement partiel, on comprend que les pistons de réaction 30a, 30b sont repoussés vers le haut (de la figure) par la pression de freinage (ou de commande de freinage) régnant dans leur chambre de réaction, jusqu'à ce que le joint torique supérieur 50 se décolle de la partie inférieure du piston de réaction 30a et, respectivement, que le siège annulaire en élastomère 69 se détache du siège annulaire 68 sur le double clapet 49. On comprend qu'à encombrement égal, la section annulaire d'échappement entre les sièges 68 et 69 soit sensiblement plus grande, comme on le voit sur la figure 1, que la section d'échappement ménagée par les passages 60 entre les ergots de guidage 58. La baisse de la pression de freinage est ainsi plus rapide sur les cylindres de frein arrière 4a, 4b, que sur les cylindres de frein de remorque (non représentés) dont la pression de freinage est contrôlée par la conduite de commande 7 qui se purge toujours avec retard, par suite des pertes de charge en ligne. Au cours du desserrage des freins, la traction de la semi-remorque sur le tracteur est ainsi maintenue, cette traction qui s'oppose au risque de mise en portefeuille, peut être accentuée par une valve de surpression qui provoque une surpression constante sur le circuit de freinage de remorque.

Si le desserrage des freins est partiel, une force d'actionnement 9 subsiste sur le poussoir d'actionnement 10, et les sièges coopérants d'échappement (joint torique supérieur 50 et partie inférieure du piston de réaction 30a pour le détendeur 31, sièges coopérants 68 et 69 pour le détendeur 32) se referment à nouveau après l'échappement d'une partie de la pression d'air comprimé régnant dans les chambres de sortie 37a et 37b.

On peut monter un manchon ou un tube d'échappement sur le couvercle 45 pour conduire l'échappement à distance de la valve de freinage double 1. Bien entendu, chacun des détendeurs de pression 31 ou 32 peut être utilisé individuellement ou en toute autre combinaison, par exemple dans un montage série pour un robinet de frein à double circuit.

Dans le cas où l'un des circuits de freinage est défaillant, par exemple le circuit arrière 4, la liaison entre le réservoir 2b et les cylindres de frein 4a et 4b, qui fuient à grand débit (par exemple par suite de la rupture de l'un de leurs flexibles d'alimentation) par l'intermédiaire du passage annulaire entre le joint torique inférieur du double clapet 49 et le siège 57 de la plaque de siège 38b, épuise rapidement la pression dans le réservoir 2b, tandis que la pression monte rapidement dans la chambre de sortie 37a et dans la chambre de réaction 35a. La barrette 24 reste en équilibre, en position inclinée ou de biais, avec le piston de réaction 30b en butée à fond de course sur la surface de butée 76b au fond de l'alésage 33b, tandis que le piston de réaction 33a est remonté pour permettre la fermeture du siège d'admission (joint torique 50 - siège annulaire 57) du double clapet 48. Lorsque l'effort d'actionnement est supprimé, le ressort de rappel 61b du piston de réaction 30b rappelle ce dernier dans la position représentée sur la figure 1.

Le montage de la valve de freinage à double circuit est particulièrement simple, car il suffit de monter les divers constituants dans le corps central 25, et d'assembler sur ce corps, par exemple par des vis autotaraudeuses 25, 45a, 45b, le corps supérieur ou couvercle 15, équipé de ses constituants et de son couvercle 16 verrouillé en position, et le couvercle inférieur 45 équipé également de ses constituants. Les corps 15, 25, 45 peuvent être réalisés en matière plastique mais aussi en un matériau métallique moulé, et les divers orifices de raccord sont spécialement disposés pour recevoir des raccords vissés ou emmanchés de relativement grande section, car ils sont étalés sur la hauteur de la valve ou selon une sorte de palette horizontale d'accès aisé pour le raccordement des conduites pneumatiques.

## Revendications

1. Détendeur de pression, notamment détendeur destiné à fournir une pression de commande de freinage, comprenant:
un poussoir d'actionnement solidaire au moins en réaction d'un piston de réaction (10) soumis à la pression délivrée par ce détendeur;
un double clapet (48, 49) de forme générale cylindrique et comportant deux sièges annulaires, dont l'un est susceptible d'isoler, par contact avec un premier siège conjugué (57), une chambre d'alimentation (41a, 41b) en fluide sous pression, et dont l'autre est susceptible d'isoler, par contact avec un deuxième siège conjugué, une chambre de sortie (37a, 37b) du détendeur par rapport à l'atmosphère ou à la décharge,
au moins l'un des deux sièges annulaires du double clapet (48, 49) étant constitué par un joint torique d'étanchéité (50) en un matériau élastique tel qu'un élastomère, appliqué par son élasticité propre dans une rainure annulaire (51) ménagée à la périphérie du corps (48a, 49a) du double clapet, sensiblement selon une section transversale de la forme générale cylindrique du double clapet et de telle manière que l'une des surfaces latérales du joint torique (50), disposée à l'extérieur de ladite rainure annulaire (51) constitue une surface de siège susceptible de coopérer de façon étanche avec ledit premier siège conjugué (57) pour obturer ladite chambre d'alimentation (41a, 41b) ou respectivement avec ledit deuxième siège conjugué pour obturer ladite chambre de sortie (37a, 37b), caractérisé en ce qu'une surface cylindrique d'alésage (64) coopérant avec un prolongement de guidage (62a) du double clapet (48) est portée par une pièce annulaire (40a, 40b) en forme générale de cloche et engagée de façon étanche par sa périphérie dans un alésage (39a) du corps de détendeur (25) pour fermer, en coopération avec le double clapet (48, 49), le fond de cet alésage, tandis que l'autre fond de l'alésage est fermé de façon étanche, en coopération avec ledit joint torique (50) du double clapet (48) par une plaque annulaire (38a, 38b) portant le premier siège annulaire (57) coopérant avec ledit joint torique pour délimiter ladite chambre d'alimentation (41a, 41b) en fluide sous pression.

2. Détendeur selon la revendication 1, caractérisé en ce que le double clapet (48, 49) est sollicité en direction du premier siège annulaire (57) par un ressort de compression (66a, 66b) formant ressort de rappel et dont une extrémité est en appui sur une surface d'appui (67a, 67b) du double clapet et dont l'autre extrémité est en appui hors de ladite chambre d'alimentation (41a, 41b) sur une pièce d'appui (43) fixée au corps principal (25) du détendeur (31, 37), et en ce que ladite pièce annulaire (40a, 40b) entoure au moins partiellement le ressort de rappel (66a, 66b) du double clapet, et est maintenue en butée entre ladite plaque annulaire (38a, 38b) portant le siège coopérant (57) et un couvercle de fond (ergots 42a, 42b) portant la pièce d'appui (43) du ressort de rappel.

3. Détendeur selon la revendication 2, dans lequel, de façon connue en soi, le double clapet (48, 49) comporte un passage central (53a, 53b) relié à l'échappement ou à la décharge, et une rainure annulaire (51) dans laquelle est logée le joint torique (50), caractérisé en ce que la rainure annulaire (51) présente une section en V ménageant deux surfaces annulaires de portée latérale (55, 56) de largeurs différentes, la surface annulaire de plus grande largeur (56) débouchant sur la surface extérieure d'étanchéité (62') du prolongement de guidage (62a, 62b) tandis que la surface annulaire de faible largeur (55) débouche, en position de fermeture du double clapet (48, 49), à proximité de la surface de siège conjuguée (57) du joint torique (50).

4. Détendeur selon l'une des revendications 1 à 3, caractérisé en ce que le double clapet (48) comporte, du côté de la chambre de sortie (37a), un prolongement de guidage (58) à surface extérieure cylindrique, engagé dans un alésage (59) de poussoir d'actionnement, et muni, au-delà de la rainure annulaire logeant le joint torique, de fentes ou passages d'échappement (60) reliés, par un passage central (53a) du double clapet, à l'échappement et en ce que l'extrémité du piston de réaction (30a) présente une forme annulaire qui est engagée à coulissement sur ledit prolongement de guidage (58), qui coulisse de façon étanche dans un alésage de guidage (34a) par sa périphérie et qui présente, à son extrémité du côté du double clapet, une surface de siège annulaire susceptible de venir en appui sur la partie annulaire en saillie dudit joint torique (50), afin d'obturer la liaison entre l'intérieur (63a) du double clapet (48) relié à la décharge et la chambre de sortie (37a) via lesdites fentes ou passages d'échappement (60).

5. Détendeur selon l'une quelconque des revendications 1 à 4, caractérisé en ce que le double clapet (49) comporte, du côté de la chambre d'alimentation (41b), un prolongement de guidage (62b) à surface extérieure cylindrique et qui coopère avec un joint annulaire à lèvres (70) disposé dans un passage annulaire ménagé entre ladite surface extérieure cylindrique de prolongement (62b) et un alésage de plus grand diamètre, la lèvre intérieure (71) dudit joint annulaire à lèvres étant au contact de ladite surface extérieure cylindrique et la lèvre extérieure étant au contact dudit alésage de plus grand diamètre.

6. Détendeur selon la revendication 5, caractérisé en ce que le talon du joint à lèvres est en appui sur une rondelle de fermeture (72) obturant ledit passage annulaire et sollicitée à l'encontre de la pression dans la chambre d'alimentation (41b) par l'extrémité d'un ressort hélicoïdal de compression (73) dont l'autre extrémité est en appui sur une paroi de fond (43) dudit détendeur à l'intérieur d'une chambre d'échappement (54) reliée à l'échappement par l'intermédiaire d'un moyen d'isolement tel qu'un filtre (46) ou un tampon d'échappement.

7. Détendeur selon l'une quelconque des revendications 1 à 4, caractérisé en ce que le double clapet (49) comporte, du côté de la chambre d'alimentation (41b), un prolongement de guidage (62b) à surface extérieure cylindrique et qui coopère avec un joint annulaire (70) disposé entre ladite surface extérieure cylindrique du prolongement (62b) et un alésage de plus grand diamètre ménagé dans ladite pièce annulaire (40b) en forme générale de cloche, et en ce que ladite pièce annulaire (40b) est en appui autour dudit prolongement (62b) sur une rondelle (72) sollicitée à l'encontre de la pression dans la chambre d'alimentation (41b) par l'extrémité d'un ressort hélicoïdal de compression (73) dont l'autre extrémité est en appui sur une paroi de fond (43) dudit détendeur à l'intérieur d'une chambre d'échappement (54) reliée à l'échappement par l'intermédiaire d'un moyen d'isolement tel qu'un filtre (46) ou un tampon d'échappement.

8. Valve à double circuit de commande de deux circuits de freinage par une barrette d'actionnement à guidage latéral et agissant simultanément sur les poussoirs de deux détendeurs parallèles, dont chacune des chambres de sortie est reliée à un circuit distinct de commande du freinage d'un véhicule, caractérisée en ce que chacun des détendeurs parallèles est constitué par un détendeur (48, 49) selon l'une des revendications 1 à 6.

9. Valve selon la revendication 8, caractérisée en ce que chacun des détendeurs (48, 49) comporte un piston de réaction (30a, 30b) en matière relativement souple, telle que de la matière plastique, et qui est muni d'une plaque métallique ou rigide (29a, 29b) en insert, et sur laquelle s'appuie de façon articulée une partie en saillie (28a, 28b) de la barrette d'actionnement (24).

10. Valve selon la revendication 8 ou 9, caractérisée en ce que la barrette d'actionnement (24), dans une disposition verticale de la valve à double circuit avec l'échappement en partie basse, présente une forme légèrement arquée vers le centre, avec une partie en saillie centrale (27) en appui sur une plaquette rigide (22) encastrée dans un logement d'un poussoir central d'actionnement (10) en matière flexible telle que de la matière plastique, la barrette (24) étant ainsi en appui, en position de service, au centre de sa partie supérieure arquée sur la partie en saillie centrale (27) et au voisinage de chacune de ses extrémités, par une partie en saillie latérale (28a, 28b), sur la plaque métallique ou rigide (28a, 28b) du piston de réaction (30a, 30b) de chacun des deux circuits de freinage, et en ce que, sous l'action de ressorts de rappel (61a, 61b) des pistons de réaction, la barrette (24) est susceptible de s'appuyer, au voisinage de chacune de ses extrémités et du côté opposé aux parties en saillie latérale (28a, 28b), sur deux surfaces de butée (15a, 15b) ménagées dans le couvercle de valve (15).

11. Valve selon l'une quelconque des revendications 8 à 10, caractérisée en ce que le corps de valve est réalisé par l'assemblage de trois parties distinctes venant maintenir en position les constituants de la valve: une partie centrale (25) portant les deux détendeurs de pression (48, 49) avec leurs pistons de réaction (30a, 30b) ; un couvercle supérieur (15) contenant le piston poussoir central (10) et le ressort de progressivité (11) et venant enfermer la barrette d'actionnement simultané (24) entre une surface d'appui (22) du poussoir central et chacune des surfaces d'appui (29a, 29b) des deux pistons de réaction (30a, 30b); un couvercle inférieur (45) contenant, le cas échéant, un filtre d'échappement (46) et maintenant en position ou comportant une paroi de fond (43) sur laquelle s'appuient les ressorts de rappel (66a, 66b) et les pièces de guidage en cloche (40a, 40b) des doubles clapets (48, 49).

## Claims

1. A pressure reducing valves, notably a pressure reducing valve for supplying a braking control pressure, comprising:
- an operating pushrod which is integral at least in reaction, with a reaction piston (10) subjected to the pressure supplied by said pressure reducing valve;
- a double plate valve (48, 49) of a generally cylindrical shape and having two annular seats, one of which is designed to-isolate, through contact with a first mating seat (57), a pressurised fluid supply chamber (41a, 41b), the other of which is designed to isolate, by contact with a second mating seat, an outlet chamber (37a, 37b) from the pressure reducing valve with respect to the atmosphere or the outlet,
at least one of the two annular seats of said double plate valve (48, 49) being constituted by a toroidal sealing ring (50) in an elastic material such as an elastomer, applied through its own elasticity into an annular groove (51) provided at the periphery of the body (48a, 49a) of said double plate valve, substantially on a cross section of the generally cylindrical shape of the said double plate valve and in such a way that one of the lateral surfaces of said toroidal seal (50), arranged externally of said annular groove (51) constitutes a seat surface adapted to co-operate in a sealed manner with said first mating seat (57) for closing off said feed chamber (41a, 41b) or respectively, with said second mating seat in order to close off said outlet chamber (37a, 37b), characterized in that a cylindrical bore surface (64) co-operating with a guiding extension (62a) of said double plate valve (48) is carried by a generally bell-shaped annular part (40a, 40b) and is engaged in a sealed manner at the periphery thereof in a bore (39a) of the body of the pressure reducing valve (25) in order to close, in co-operation with said double plate valve (48, 49), the base of said bore, while the other base of said bore is closed in a sealed manner, in co-operation with the said toroidal seal (50) of said double-plate valve (48) by an annular plate (38a, 38b) carrying the first annular seat (57) co-operating with said toroidal seal in order to delimit said pressurised fluid feed chamber (41a, 41b).

2. The pressure reducing valve according to claim 1, characterised in that said double plate valve (48, 49) is urged in the direction of said first annular seat (57) by a compression spring (66a, 66b) forming a recall spring and the end of which bears against an abutment surface (67a, 67b) of said double plate valve and the other end of which bears, externally of the said feed chamber (41a, 41b) on an abutment part (43) fixed to the main body (25) of the pressure reducing valve (31, 37), and in that said annular part (40a, 40b) surrounds, at least in part, the recall spring (66a, 66b) of the double plate valve, and is maintained in abutment between the said annular plate (38a, 38 b) carrying the cooperating seat (57) and a bottom cover (lugs 42a, 42b) carrying the abutment part (43) of the recall spring.

3. The pressure reducing valve according to claim 2, in which, in a manner known per se, the double plate valve (48, 49) carries a central passage (53a, 53b) linked to the outlet or discharge, and an annular groove (51) in which said toroidal seal (50) is housed, characterised in that said annular groove (51) has a V-shaped cross section providing two lateral annular bearing surfaces (55, 56) of different widths, the widest annular surface (56) terminating at the outer sealing surface (62') of said guiding extension (62a, 62b) while the narrower annular surface (55) terminates, in the closed position of said double plate valve (48, 49) close to the surface of the mating seat (57) of said toroidal seal (50).

4. The pressure reducing valve according to one of claims 1 to 3, characterised in that the double plate valve (48) carries, at the outlet chamber side (37a), a guiding extension (58) having an outer cylindrical surface, engaging into a bore (59) of said operating pushrod, and provided, beyond the annular groove housing said toroidal seal, with slots or escape passages (60) linked, by a central passage (53a) of the double plate valve, to the discharge and in that the end of the reaction piston (38) has an annular shape which engages slidingly on said guiding extension (58), which slides in a sealed manner in a guiding bore (34a) by its periphery and which has, at the end thereof nearest the double plate valve, an annular seat surface designed to come into abutment with a projecting annular part of said toroidal seal (50), in order to shut off the connection between the inside (63a) of the double plate valve (48) linked to the discharge, and the outlet chamber (37a) via said slots or escape passages (60).

5. The pressure reducing valve according to any one of claims 1 to 4, characterised in that the double plate valve (49) carries, at the feed chamber end thereof (41b), a guiding extension (62b) having an outer cylindrical surface and which co-operates with an annular lipped seal (70) provided in an annular passage disposed between said outer cylindrical extension surface (62b) and a bore of a larger diameter, and the inner lip (71) of said annular lipped seal being in contact with said outer cylindrical surface and the outer lip being in contact with said larger diameter bore.

6. The pressure reducing valve according to claim 5, characterised in that the heel of said lipped seal bears against a closing washer (72) closing off said annular passage and acted on, against the pressure in said feed chamber (41b) by the end of a helical compression spring (73) the other end of which bears on a base wall (43) of said pressure reducing valve inside a discharge chamber (54) connected to the discharge via an isolating means such as a filter (46) or discharge buffer means.

7. The pressure reducing valve according to any one of claims 1 to 4, characterised in that said double plate valve (49) includes, at the feed chamber end (41b) thereof, a guide extension (62b) having an outer cylindrical surface and which co-operates with an annular seal (70) provided between said outer cylindrical extension surface (62b) and a larger diameter bore provided in said annular part (40b) of a generally bell-shape, and in that said annular part (40b) abuts, around said extension (62b) against a washer (72) which is acted on, against the pressure force in said feed chamber (41b) by the end of a helical compression spring (73) the other end of which bears against a base wall (43) of said pressure reducing valve inside a discharge chamber (54) linked to the discharge via isolating means such as a filter (46) or discharge buffer means.

8. A valve having a dual control circuit for two braking circuits using a laterally-guided operating bar acting simultaneously on the pushrods of two parallel pressure reducing valves, each one of the outlet chambers of which is linked to a separate vehicle braking control circuit, characterised in that each one of said parallel pressure reducing valves is constituted by a pressure reducing valve (48, 49) according to one of claims 1 to 6.

9. The valve according to claim 8, characterised in that each one of said pressure reducing valves (48, 49) includes a reaction piston (30a, 30 b) in a relatively flexible material such as a plastics material and which is provided with a metallic or rigid plate (29a, 29b) as an insert, and on which, in an articulated fashion, a projecting portion of said operating bar (24) bears.

10. The valve according to claim 8 or 9, characterised in that said operating bar (24), in a vertical arrangement of said dual circuit valve with the discharge at the lower portion thereof, is slightly arc-shaped towards the center, with a central projecting portion (27) abutting against a rigid plate (22) which is embedded in a housing of a central operating pushrod (10) in a flexible material such as a plastic material, said bar (24) being thus in abutment, in the operating position, at the center of its upper arc-shaped part, against said central projecting portion (27) and in the region of each one of the ends thereof, through a a laterally-projecting portion (28a, 28b), against said metallic or rigid plate (28a, 28b) of said reaction piston (38a, 30b) of each one of said two braking circuits, and in that, under the action of the recall springs (61a, 61b) of the said reaction pistons, the bar (24) is designed to bear, in the region of each one of of the ends thereof and on the the side opposite to the laterally-projecting portions (28a, 28b) against two abutment surfaces (15a, 15b) provided on the valve cover (15).

11. The valve according to any one of claims 8 to 10, characterised in that the valve body is provided by assembly of three separate parts which maintain the constituents of the valve in position: a central portion (25) carrying the two pressure reduction valves (48, 49) with their reaction pistons (30a, 30b); and a cover (15) containing the central pushrod piston (10) and the spring providing progressive action (11) and entrapping said operating bar simultaneously (24) between an abutment surface (22) of said central pushrod and each one of the abutment surfaces (29a, 29b) of the two reaction pistons (30a, 30b); and a lower cover (45) containing, optionally, a discharge filter (46) and maintaining in position, or carrying, a base wall (43) on which the recall springs abut (66a, 66b) along with the bell-shaped guiding parts (48, 40 b) of the double-plate valves (48, 49).

## Patentansprüche

1. Druckmindererventil für das Liefern eines Bremssteuerdrucks, umfassend:
- einen Betätigungsstößel, der mindestens in Reaktion fest mit einem Reaktionskolben (30) verbunden ist, welcher dem von diesem Druckmindererventil gelieferten Druck ausgesetzt ist;
- ein Doppelventil (48, 49) allgemein zylindrischer Form, welches zwei ringförmige Dichtungssitze aufweist, von denen einer über Kontakt mit einem ersten gekoppelten Sitz (57) eine Versorgungskammer (41a, 41b) für Druckmittel trennen kann, und von denen der andere über Kontakt mit einem zweiten gekoppelten Sitz (57) eine Austrittskammer (37a, 37b) des Mindererventils von der Atmosphäre oder der Entlüftung trennen kann,
wobei mindestens einer der zwei ringförmigen Sitze des Doppelventils (48, 49) von einem torusförmigen Dichtungsglied (50) aus einem elastischen Material wie etwa einem Elastomer gebildet wird, welches durch seine Eigenelastizität in eine am Gehäuseumfang des Doppelventils (48a, 49a) ausgesparte Ringnut (51) eingelegt wird, dessen Querschnitt die im wesentlichen allgemein zylindrische Form des Doppelventils aufweist und derart, daß eine der Seitenflächen der torusförmigen Dichtung (50), welche außerhalb der Ringnut (51) angeordnet ist, eine Sitzfläche darstellt, welche mit dem ersten gekoppelten Sitz (57) auf dichtende Weise zusammenwirken kann, um die Versorgungskammer (41a, 41b) zu verschließen, beziehungsweise mit dem zweiten gekoppelten Sitz zusammenwirken kann, um die Austrittskammer (37a, 37b) zu verschließen, gekennzeichnet dadurch, daß eine zylindrische Bohrungsfläche (64), welche mit einer Führungsverlängerung (62a) des Doppelventils (48) zusammenwirkt, von einem allgemein topfförmigen Ringstück (40a, 40b) getragen wird und mit seiner Umfangsfläche eine Bohrung (39a) des Druckmindererventilgehäuses (25) auf dichtende Weise durchsetzt, um unter Zusammenwirkung mit dem Doppelventil (48, 49) den Boden dieser Bohrung zu verschließen, während der andere Boden der Bohrung unter Zusammenwirken mit der torusförmigen Dichtung (50) des Doppelventils (48) von einer ringförmige Platte (38a, 38b), die den ersten ringförmigen Sitz (57) trägt, welcher mit der torusförmigen Dichtung zusammenwirkt, um die Versorgungskammer (41a, 41b) für Druckmittel abzugrenzen, auf dichtende Weise verschlossen ist.

2. Druckmindererventil gemäß Anspruch 1, gekennzeichnet dadurch, daß das Doppelventil (48, 49) von einer Druckfeder (66a, 66b) in Richtung des ersten ringförmigen Sitzes (57) beansprucht wird, wobei die Druckfeder eine Rückstellfeder bildet und dessen eines Ende an eine Anlagefläche (67a, 67b) des Doppelventils anliegt und dessen anderes Ende außerhalb der Versorgungskammer (41a, 41b) auf eine an dem Hauptgehäuse (25) des Druckmindererventils (31, 37) befestigten Anlagefläche (43) anliegt, und dadurch, daß das Ringstück (40a, 40b) mindestens teilweise die Rückstellfeder (66a, 66b) des Doppelventils umgibt und zwischen der ringförmigen Platte (38a, 38b), welche den zusammenwirkenden Sitz (57) trägt, und einem Bodendeckel (Nocken 42a, 42b), welcher die Anlagefläche (43) der Rückstellfeder trägt, im Anschlag gehalten wird.

3. Druckmindererventil gemäß Anspruch 2, in welchem das Doppelventil (48, 49) auf vorbekannte Weise einen mit der Entlüftung oder dem Austritt in Verbindung stehenden Zentralkanal (53a, 53b) aufweist, sowie eins Ringnute (51), in welcher eine torusförmige Dichtung (50) angeordnet ist. gekennzeichnet dadurch, daß die Ringnut (51) einen V-förmigen Querschnitt aufweist, in welcher zwei ringförmige Stützseitenflächen (55, 56) verschiedener Breite ausgespart sind, wobei die ringförmige Fläche größerer Breite (56) auf der äußeren Dichtungsfläche (62') der Führungsverlängerung (62a, 62b) endet, während die ringförmige Fläche geringerer Breite (55) bei Schließlage des Doppelventils (48, 49) in der Nähe der gekoppelten Sitzfläche (57) der torusförmigen Dichtung (50) endet.

4. Druckmindererventil gemäß mindestens einem der Ansprüche 1 bis 3, gekennzeichnet dadurch, daß das Doppelventil (48) seitens der Austrittskammer (37a) eine Führungsverlängerung (58) mit zylindrischer Außenfläche aufweist, welcher eine Betätigungsstößelbohrung (59) durchsetzt und welche außer der die torusförmige Dichtung aufnehmenden Ringnut Druckentlastungsschlitze oder - durchlässe (60) aufweist, die über einen Zentralkanal (53a) des Doppelventils mit dem Auslaß verbunden sind, und dadurch, daß das Ende des Reaktionskolbens (30a) eine Ringform aufweist, welche gleitend auf der Führungsverlängerung (58) eingreift, mit seinem Umfang auf dichtende Weise in eine Führungsbohrung (34a) gleitet und welches an seinem Ende seitens des Doppelventils eine ringförmige Sitzfläche aufweist, die von dem vorspringenden ringförmigen Teil der torusförmigen Dichtung (50) gestützt werden kann, um über die Entlüftungsschlitze oder -durchlässe die Verbindung zwischen dem Inneren (63a) des Doppelventils (48), das mit dem Auslaß in Verbindung steht, und der Austrittskammer (37a) zu verschließen.

5. Druckmindererventil gemäß mindestens einem der Ansprüche 1 bis 4, gekennzeichnet dadurch, daß das Doppelventil (48) seitens der Versorgungskammer (41b) eine Führungsverlängerung (62b) mit zylindrischer Außenfläche aufweist, welche mit einer ringförmigen Lippendichtung (70) zusammenwirkt, welche sich in einem ringförmigen Durchlaß zwischen der zylindrischen Außenfläche der Verlängerung (62b) und einer Bohrung größeren Durchmessers befindet, wobei die Innenlippe (71) der ringförmigen Lippendichtung mit der zylindrischen Außenfläche in Kontakt ist und die Außenlippe mit der Bohrung größeren Durchmessers in Berührung ist.

6. Druckmindererventil gemäß Anspruch 5, gekennzeichnet dadurch, daß der Lippendichtungsrücken sich auf eine Schließscheibe (72) stützt, welche den ringförmigen Durchlaß verschließt und über das Ende einer schraubenförmigen Druckfeder (73) einer dem Druck in der Versorgungskammer (41b) entgegengesetzten Kraft ausgesetzt ist, wobei das andere Ende der Schraubenfeder von einer Bodenwand (43) des Druckmindererventils im Innern einer Entlüftungskammer (54) gestützt wird, wobei die Entlüftungskammer mit dem Auslaß über ein Trennorgan wie ein Filter (46) oder ein Entlüftungsstopfen verbunden ist.

7. Druckmindererventil gemäß mindestens einem der Ansprüche 1 bis 4, gekennzeichnet dadurch, daß das Doppelventil (49) seitens der Versorgungskammer (41b) eine Führungsverlängerung (62b) mit zylindrischen Außenfläche aufweist, und welche mit einer ringförmigen Dichtung (70) zusammenwirkt, welche zwischen der zylindrischen Außenfläche der Verlängerung (62b) und einer in dem Ringstück (40b) von allgemeiner Topfform befindlichen Bohrung von größerem Durchmesser angeordnet ist, und dadurch, daß das Ringstück (40b) um die Verlängerung (62b) herum von einer Scheibe (72) gestützt wird, welche über das Ende einer schraubenförmigen Druckfeder (73) einer dem Druck in der Versorgungskammer (41b) entgegengesetzten Kraft ausgesetzt ist, wobei das andere Ende der Druckfeder von einer Bodenwand (43) des Druckmindererventils im Innern einer Entlastungskammer (54) gestützt wird, wobei die Entlüftungskammer mit dem Auslaß über ein Trennorgan wie ein Filter (46) oder ein Entlüftungsstopfen verbunden ist.

8. Ventil mit doppeltem Steuerkreis für zwei Bremskreise, über einen Betätigungsbalken mit seitlicher Führung, welcher gleichzeitig auf die Stößel zweier paralleler Druckmindererventile einwirkt, deren jeweilige Auslaßkammer mit einem getrennten Bremssteuerkreis eines Fahrzeugs verbunden ist, gekennzeichnet dadurch, daß jedes der parallelen Druckmindererventile von einem Druckmindererventil gemäß mindestens einem der Ansprüche 1 bis 6 gebildet wird.

9. Ventil gemäß Anspruch 8, gekennzeichnet dadurch, daß jedes der Druckmindererventile (48, 49) einen Reaktionskolben (30a, 30b) aus relativ elastischem Material wie Kunststoff aufweist, welcher mit einer eingebauten metallischen oder steifen Platte (29a, 29b) ausgestattet ist, und auf welchem sich auf angelenkte Weise ein vorspringender Teil (28a, 28b) des Betätigungsbalken stützt.

10. Ventil gemäß Anspruch 8 oder 9, gekennzeichnet dadurch, daß der Betätigungsbalken (24), bei senkrechter Anordnung des Ventils mit doppeltem Kreis mit im unteren Teil befindlichem Entlüftung, eine der Mitte zu leicht gebogene Form aufweist, mit einem zentral vorspringendem Teil (27), in Anlage auf ein steifes Plättchen (22), welches in dem Sitz eines zentralen Betätigungsstößels (10) aus flexiblem Material wie Kunststoff eingesteckt ist, wobei der Balken (24) derart in Betriebslage in der Mitte seines oberen gebogenen Teils von dem zentral vorspringenden Teil (27) und in der Nähe seiner jeweiligen Enden über ein seitlich vorspringenden Teil (28a, 28b) von der metallischen oder steifen Platte (28a, 28b) des Reaktionskolbens (30a, 30b) von jedem der zwei Bremskreise gestützt wird, und dadurch, daß unter Einwirkung der Zugfedern (61a, 61b) der Reaktionskolben der Balken (24) sich in der Nähe jedes seiner Enden und auf der den seitlichen vorspringenden Teilen (28a, 28b) entgegengesetzten Seite auf zwei in dem Ventildeckel (15) ausgesparte Anlageflächen (15a, 15b) stützen kann.

11. Ventil gemäß mindestens einem der Ansprüche 8 bis 10, gekennzeichnet dadurch, daß das Ventilgehäuse durch Zusammensetzen von drei verschiedenen Teilen erhalten wird, welche die Lage der Ventilbestandteile sichern: einen zentralen Teil (25), welcher die zwei Druckmindererventile (48, 49) mit ihren Reaktionskolben (30a, 30b) trägt; einen oberen Deckel (15), welcher den zentralen Betätigungsstößel (10) und die Feder (11) mit progressiver Charakteristik enthält. welche den Simultanbetätigungsbalken (24) zwischen einer Anlagefläche (22) des zentralen Stößels und jeder der Anlageflächen (29a, 29b) der zwei Reaktionskolben (30a, 30b) einschließt; einen unteren Deckel (45), welcher gegebenenfalls einen Entlüftungsfilter (46) enthält und welcher eine Bodenwand (43) aufweist oder in Position erhält, welche die Rückstellfedern (66a, 66b) und die topfförmigen Führungsteile (40a, 40b) der Doppelventile (48, 49) stützt.
